(19) Europäisches Patentamt

European Patent Office

Office européen des brevets

(11) Publication number : **0 583 079 A1**

(12) **EUROPEAN PATENT APPLICATION**

(21) Application number : **93305543.6**

(22) Date of filing : **15.07.93**

(51) Int. Cl.⁵ : **B60R 21/20**

(30) Priority : **13.08.92 US 929018**

(43) Date of publication of application :
**16.02.94 Bulletin 94/07**

(84) Designated Contracting States :
**DE ES FR GB IT NL**

(71) Applicant : **DAVIDSON TEXTRON INC.**
**Industrial Park**
**Dover New Hampshire 03820-1504 (US)**

(72) Inventor : **Carter, James**
**1609 Kirkman Road, Apt. 2202**
**Orlando, Florida 32811 (US)**

(74) Representative : **Hands, Horace Geoffrey et al**
**GEORGE FUERY & CO Whitehall Chambers 23**
**Colmore Row**
**Birmingham B3 2BL (GB)**

(54) **Hidden door for an air bag restraint system.**

(57)   An air bag restraint system is housed within an interior trim product with a hidden door (10) that is opened when an air bag is inflated for deployment into the passenger car for a vehicle. The door (10) is formed in a reinforced segment of a layer of low density rigid foam material (34) that forms the structural support for an outer skin (32) that forms the outer cover of the interior trim product. The hidden door (10) is formed with cast in place convolutions (42,44,46) in the reinforced segment of the layer of low density rigid foam material (34) one of which convolutions forms a door hinge (42,44) and the other of which convolutions forms a weakened tear seam (46) which separates when the air bag impacts thereagainst to tear the cover for forming an opening therethrough for deployment of the air bag into the passenger compartment of a vehicle.

Fig. 3

EP 0 583 079 A1

## Field of the Invention

This invention relates to air bag restraint systems known as supplemental inflatable restraints and more particularly to such restraints which are housed in interior trim products of a motor vehicle by a hidden door assembly.

## Background of the Invention

Various air bag restraint systems have been proposed in which an access door is arranged behind a continuously formed outer skin or cover. In some cases the underside of the outer skin is perforated or weakened. As shown in United States Patent Nos. 3,622,176 and 4,246,213 the weakened sections represent underlying depressions in the outer cover which show through as an outline of the underlying air bag assembly. Furthermore, such systems require that the outer cover be torn apart at the weakened seams. If the seams are irregular in form the opening force will vary and at times may tend to impede the release of an air bag.

In other arrangements, the cover assembly includes a separate cutting device that will pierce the outer skin. Examples of such separate devices are set-forth in United States Patent No. 4,097,064 and copending United States Applications 601,406 filed October 22, 1990.

## Summary of the Invention

The present invention includes a cover for an air bag restraint system which is easily fabricated using standard foam molding apparatus and which has a layer of low density rigid material that supports the outer cover of an interior trim product and which further includes an integral hidden door operable on air bag inflation to form an opening in the outer cover for deployment of the inflated air bag into the passenger compartment of a motor vehicle.

A feature of the present invention is to form convolutions in the layer of low density rigid material which define a hinge and a weakened tear seam which will provide pivotal movement of a hidden door which will separate the layer of rigid material and the outer cover to form an air bag deployment opening conforming generally to the shape of the hidden door.

Still another feature of the present invention is to provide a cover assembly for concealing an air bag restraint assembly including an air bag, a housing for the air bag, a gas generator located in the housing for supplying gas to the air bag in response to vehicle impact the cover assembly comprising an outer skin covering an interior trim product within the vehicle and including a backing layer of low density rigid reaction injection mold material behind the outer skin for supporting the outer skin; the backing layer is reinforced at a hidden door therein and first and second convolutions therein form a hinge and a weakened tear segment which in one embodiment is formed of unreinforced low density rigid reaction injection mold material. The door is operated on air bag inflation to penetrate both the reaction injection molded layer and the outer skin to separate and fold back segments of the backing layer and outer skin to form an opening therethrough for deployment of an air bag into the passenger compartment of a vehicle when inflated by the gas generator.

A still further feature of the present invention is to provide a cover assembly for concealing an air bag restraint assembly including an air bag, a housing for the air bag and a gas generator located in the housing for supplying gas to the air bag in response to vehicle impact, the cover assembly comprising: an outer skin covering an interior trim product within the vehicle and including a backing layer of reaction injection mold material having a density in the range of 10-50 pcf. A portion of the backing layer has reinforcing material embedded therein to define a hidden door within the cover assembly having convolutions formed on the inboard surface of the backing layer defining a hinge and a weakened tear section in the hidden door and wherein the tear section will separate to cause the door to penetrate both the backing layer and the outer skin to pierce and fold back segments of the backing layer and outer skin to form an opening therethrough for deployment of an air bag into the passenger compartment of a vehicle when inflated by the gas generator.

In the construction of soft foam insert doors a preformed outer skin or shell member formed by casting vinyl particles on a heated mold surface is seated in a female cavity of a foam mold as set-forth in United States Patent No. 4,784,336 and 4,873,032 which are commonly assigned to the assignee in the present application, and are incorporated herein by reference. A first substrate member is supported at construction holes on the lid of the mold which closes to form a mold space between the substrate and the preload vinyl skin. The substrate on the lid can also include a port through which foam precursors are directed into the mold space for reaction therein to form a microcellular foam material that is soft to the feel. The resultant structure is removed from the foam mold and includes a vinyl skin which can be colored and grained to match the aesthetic appearance of the outer vinyl surface of an interior trim product such as an instrument panel having a upper opening therein for the deployment of an air bag. In the present invention there is no substrate and the skin is located in a mold cavity into which the RIM material is inserted in stages with it including reinforced precursors only when filling in the vicinity of the hidden door part of the mold cavity. In the present invention the mold has a member with recesses therein which are configured to form the convolutions. The use of convolutions to form the hinge and weakened tear segment of the hidden door enable the door pattern to assume many forms including rectangular, three sided U-shaped doors, weakened X sections or other geometries depending upon the type of interior trim product and supplemental inflatable restraint which are used in association with the invention.

## Brief Description of the Drawings

Other advantages of the present invention will be readily appreciated as the same becomes better understood by reference to the following detailed description when considered in connection with the accompanying drawings wherein:

FIG. 1 is a perspective view of an instrument panel or dashboard which is one suitable interior trim product for housing and providing an opening for deployment of an inflatable restraint into the passenger compartment of a motor vehicle;

FIG. 2 is an enlarged top elevational view of the instrument panel with a portion of an outer cover and its backing foam broken away to show the hidden door retainer of the present invention;

FIGS. 2A, 3A, 4A are top elevational views of other embodiments of the invention;

FIG. 3 is an enlarged sectional view of one embodiment of the invention taken along the line 3-3 of FIG. 2;

FIG. 4 is an enlarged sectional view like FIG. 3 but showing the retainer in a partially opened air bag deployment position; and

FIG. 5 is an enlarged sectional view showing the retainer in a fully opened air bag deployment position.

## Description of Preferred Embodiment of the Invention

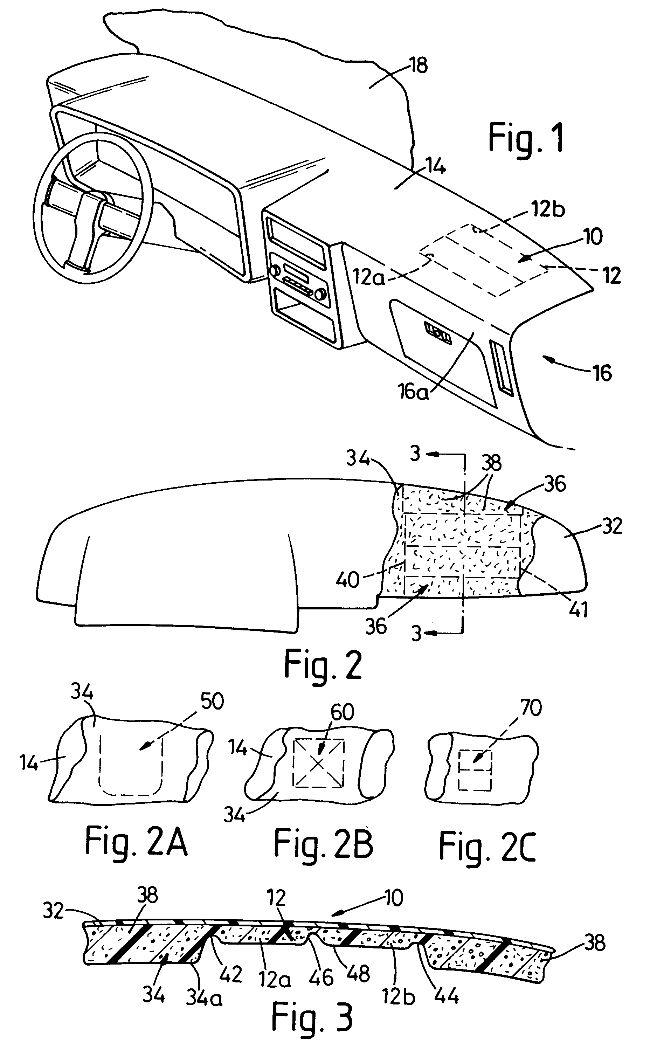

Referring now to FIG. 1, a door assembly for an opening through which an inflatable restraint safety device is deployed into a passenger compartment is shown at 10. In this embodiment of the invention the door assembly 10 is shown in a top mount position in which it defines a hidden door 12 formed beneath the top surface 14 of a dashboard or instrument panel 16. The door 12 has a front edge 12a located adjacent the front surface 16a of the instrument panel 16 and it includes a rear edge 12b located in underlying relationship to a sloped front windshield 18. While shown in the upper surface of the instrument panel, the door could also be formed in the front surface 16a in what is known as a mid-mount position. The top mount or mid-mount of the door assembly 10 depends upon the location of an underlying air' bag restraint system 20. In the illustrated embodiment of FIG. 1, the air bag restraint system 20 includes a gas generator or canister 22 located in a canister housing or casing 24 mounted on a suitable vehicle component not shown. The gas generator has a plurality of openings 22a through which a suitable inflatant gas flows when an impact sensor 26 is actuated upon vehicle impact to condition a controller 28 to initiate gas generation all as is well known to those skilled in the art. The inflatant is directed into the interior of an inflatable air bag 30 connected at one end 30a to the casing 24 and having convolutions 30b which expand as the air bag is inflated to impact against the underside of the door assembly 10 to cause it to pivot upwardly toward the windshield 18 to allow for deployment of the air bag 30 through the opening 12.

In accordance with the invention, the door assembly includes a vinyl outer cover 32 which can be formed from cast vinyl material by processes such as those set-forth in United States Patent Nos. 4,664,864 and 4,784,911, commonly assigned to the same assignee as in the present application. Such outer covers 32 have colors and grain appearances that are accurately matched to the appearance of the surface of an associated interior trim product such as the illustrated instrument panel. The vinyl outer cover 32 is supported by a backing layer of reinforced injection molded material forming a rigid substrate 34 in a foam mold apparatus such as illustrated and described in United States Patent No.4,806,094, commonly assigned to the same assignee as the present invention. In accordance with the present invention the substrate has a region 36 therein reinforced by suitable embedded material such as glass fibers 38, scrim PVC coated nylon as manufactured by Luckenhaus Corporation or other suitable reinforcing material to form the hidden door 12. The RIM foam system is shot into a mold cavity directly behind the grained outer cover 32 which can be polyvinyl chloride (PVC) or acrylonitrile-styrene-acrylic (ABS) vacuum formed with or without a layer of soft foam or alternatively the outer cover 32 can be a cast dry plastisol material or liquid cast plastisol PVC or cast dry plastisol with an expanded thickness for providing a soft feel.

The outer cover 32 will be supported by the backing layer or rigid substrate 34 to match the styling and appearance of a foamed interior trim product. The rigid substrate 34 is a backing layer of reaction injection material such as ICI 8709D and ICI 8700A urethane foams supplied by ICI Americas Inc. In a representative embodiment, the rigid substrate, formed with one layer of fiber glass mat, has the following comparative physical properties:

## COMPETITIVE ANALYSIS

| | DITT[1] FN-10 O/P | Inland Buick C D/P | Lustran 246 ABS | ASTM Test |
|---|---|---|---|---|
| Density Mean | .38 | .70 | 1.07 | D-3574[2] |
| St. Dev. | .02 | .01 | | |
| Thickness, mm | 4.65 | 2.67 | 2.5 | -- |
| Ash, % | 16.4 | 14.9 | -- | -- |
| | 1.2 | .9 | | |
| Flexural modulus, MPa | 641 | 640 | 2700 | D-790 |
| | 46 | 143 | | |
| Tensile Strength, | 12.9 | 22.8 | 33 | D-638 |
| MPa (@ max load) | 1.0 | 5.5 | | |
| Elongation, % | 1.9 | 2.7 | -- | D-638 |
| (@ break) | 0.4 | .4 | | |
| Hardness | 87.8 | -- | 113 | D-2240 |
| | 1.5 | | (Rockwell R) | |
| Water Absorption, % | 2.8 | 2.3 | -- | D-570 |
| Flammability, mm/min | SE/NBR | SE/NBR | -- | MVSS 302 |
| PTL# | #10307 | #10149 | published | |
| | #10308 | | data | |

COMPETITIVE ANALYSIS

| | DITT[1] FN-10 Q/P | Inland Buick C D/P | Lustran 246 ABS | ASTM Test |
|---|---|---|---|---|
| Instrumented impact, (5.4 KS hg hammer 787mm drop height) Energy to Break, J | | | | D-3763 |
| @23°C | 11.0 .7 | 7.1 3.5 | 16.8 | |
| Izod Impact,J/M (notched) | 154.3 51.8 | -- | 267 | D-256 |
| Heat Sag, mm (127mm overhang 1 hr. @ 121°C) | No Change | 3.0 1.7 | -- | -- |
| HDT, °C @.45 MPa | 120.8 10.4 | -- | 93 | D-648 |
| @1.82 MPa | 75.1 5.6 | -- | 87 | |
| CLTE mm/mm/°C (x10$^5$) | 1.6 | 1.5 | 8.3 | D-696 |
| PTL# | #10307 #10308 | #10149 | #10077 published data | |

In accordance with one feature of the present invention, the substrate 34 is formed with two spaced side sections 40, 41 and spaced convolutions 42, 44 on the inboard surface 34a thereof. The convolutions 42, 44 form reduced sections in the hidden door 12 that define two spaced hinges for movement of door segments 12a, 12b into an upwardly pivoted position when an intermediate weakened tear seam defined by a convolution 46 formed intermediate the hinges 42, 44 in an inboard air bag impact surface 48.

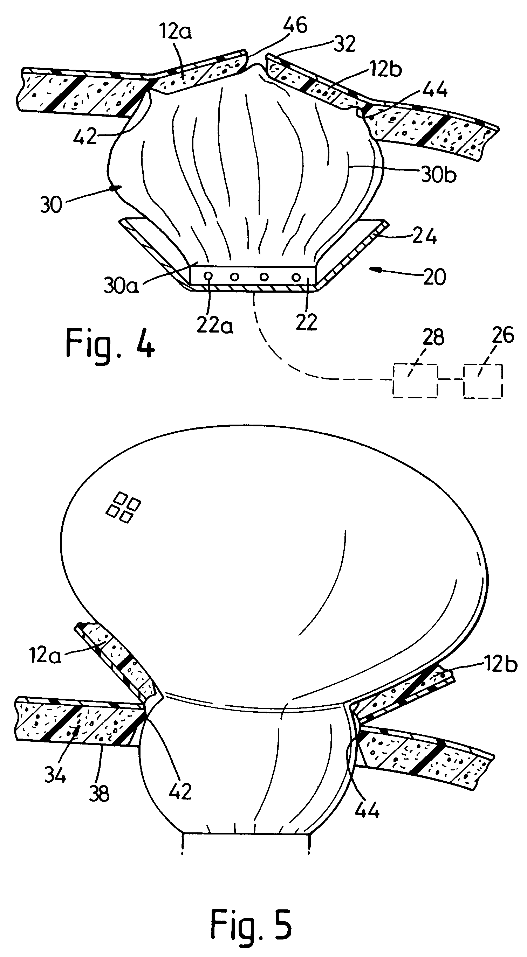

The hidden door's side sections are recesses 40, 41 forming weakened sections at the sides of the door segments 12a, 12b. The weakened tear seams defined by the side recesses 40, 41 and the intermediate convolution 46 are not reinforced by the glass fibers 38. Accordingly, when the air bag is inflated as shown in FIG. 4, the convolution 46 will separate to tear the cover 32 to allow the two door segments 12a, 12b to pivot upwardly about the convolutions 42, 44 forming the hinges. When the door segments 12a, 12b are fully vertical the convolutions 42, 44 form curved relief surfaces for smoothing the deployment of the air bag into the passenger compartment. Specifically, when the embedded material is PVC coated nylon, the mat should extend 3 to 6 inches beyond the outer door edges and should include slits or cuts to match the weakened tear seams in the rigid RIM foam.

In all cases, deployment of an air bag causes it to impact the inside surface of the retainer 34 to force the door segments 12a, 12b upwardly and outwardly so as to produce an opening orange peel type action until the overlying cover material is fully peeled back to define an opening more or less congruent with the outline of the weakened segments in the retainer. Since the hinges and weakened tear segments are defined by recesses or convolutions on the inboard surface of the retainer or substrate 34, the hidden door 12 is completely invisible at the outer surface of the interior trim product. The door pattern is easily varied from the rectangular form to a three sided U form (at 50 in FIG. 2A) or to an X section (at 60 in FIG. 3A) or an H section (at 70 in FIG. 4A) merely by changing the location of the convolutions on the underside of the substrate 34.

The invention provides considerable design freedom since the depth of the convolutions and resulting hinge and tear seam sections can vary greatly without being observable from the outer surface of the cover or without adversely affecting the surface quality of the interior trim product.

The door assembly of the subject invention thereby provides a soft skin door that is easily matched to adjacent interior trim products having foamed in place material and wherein the door assembly can be formed by standard foam molding apparatus without requiring special modifications to substrate components or without modification of the lid for carrying such substrates and wherein a substrate has a rigidity and low density and weakened sections that are invisible from the exterior of an interior trim product so that a passenger is unaware of the underlying air bag restraint system. While the invention is shown in association with a dashboard or instrument panel it is equally suitable for use with other interior trim products such as driver side steering wheel housings. The arrangement is manufactured not only with standard equipment practicing standard steps it enables the door to be used with less steps and in a more cost effective manner than the assemblies in the prior art.

The invention has been described in an illustrative manner, and it is to be understood that the terminology which has been used is intended to be in the nature of words of description rather that of limitation.

Obviously, many modifications and variations of the present invention in light of the above teachings may be made. It is, therefore, to be understood that within the scope of the appended claims, the invention may be practiced otherwise than as specifically described.

## Claims

1. An invisible door assembly for a supplemental inflatable restraint device housed within an interior trim product of a motor vehicle comprising an outer skin cover formed as the outer skin of the interior trim product;

   a layer of low density rigid foam material backing said outer cover having an inner surface with an impact surface and first and second hinge segments formed integrally of said rigid foam material in said inner surface on either side of said impact surface and a hidden tear segment formed in said inner surface in said impact surface intermediate said first and second hinge segments;

   means for reinforcing said low density rigid foam material to provide greater strength at said first and second hinge segments than at said hidden tear segment;

   said layer of low density rigid foam material overlying an inflatable air bag; means including a canister for locating said air bag to be deployed against the impact surface of said layer of low density rigid foam material between said first and second hinge segments for imposing a force on the hidden tear segment for causing it to separate to form an opening through said cover for deployment of an inflated air bag into the passenger compartment of a motor vehicle.

2. An invisible door assembly for a supplemental inflatable restraint device housed within an interior trim product of a motor vehicle comprising an outer skin cover formed as the outer skin of the interior trim product;

   a layer of low density rigid foam material backing said outer cover for forming a surface support throughout the planar extent of said outer cover; said layer of low density rigid foam material having a hidden door integral therewith; means for reinforcing said hidden door to have a greater strength than the remainder of said layer of low density rigid foam material; said layer of low density rigid foam material having an inboard impact surface and first and second hinge segments formed integrally of said rigid foam material on either side of said inboard impact surface and a hidden tear segment formed in said inboard impact surface intermediate said first and second hinge segments;

   means for reinforcing said low density rigid foam material to provide greater strength at said first and second hinge segments than at said hidden tear segment;

   said layer of low density rigid foam material overlying an inflatable air bag; means including a canister for locating said air bag to be deployed against the inboard impact surface of said layer of low density rigid foam material between said first and second hinge segments for imposing a force on the hidden tear seam segment for causing it to separate to form an opening through said cover for deployment of an inflated air bag into the passenger compartment of a motor vehicle.

3. An invisible door assembly for a supplemental inflatable restraint device housed within an interior trim product of a motor vehicle comprising an outer skin cover formed as the outer skin of the interior trim product;

   a layer of low density rigid material backing said outer cover having an inboard impact surface and first and second hinge segments formed integrally of said low density rigid material on either side of said inboard impact surface and a hidden tear seam segment formed in said inboard impact surface intermediate said first and second hinge segments;

and said layer of low density rigid material overlying an inflatable air bag; means including a canister for locating said air bag to be deployed against the inboard surface of said layer of low density rigid material between said first and second hinge segments for imposing a force on the hidden tear seam segment for causing it to separate to form an opening through said cover for deployment of an inflated air bag into the passenger compartment of a motor vehicle.

4. An invisible door assembly for a supplemental inflatable restraint device housed within an interior trim product of a motor vehicle comprising an outer skin cover formed as the outer skin of the interior trim product;

a layer of low density rigid material backing said outer cover having an inboard impact surface including first and second convolutions therein; one of said convolutions forming a hinge and the other of said convolutions forming a hidden tear seam segment formed in said inboard impact surface;

said layer of low density rigid material overlying an inflatable air bag; means including a canister for locating said air bag to be deployed against the inboard surface of said layer of low density rigid material for imposing a force on the hidden tear seam segment for causing it to separate to form an opening through said cover for deployment of an inflated air bag into the passenger compartment of a motor vehicle.

5. An invisible door assembly for a supplemental inflatable restraint device housed within an interior trim product of a motor vehicle comprising an outer skin cover formed as the outer skin of the interior trim product;

a layer of low density rigid material bonded to said outer cover having an inboard impact surface; means including first and second convolutions in said layer forming a hidden door of generally rectangular configuration in said layer of low density rigid material; one of said convolutions forming a hinge on said door and the other of said convolutions forming a hidden tear seam segment formed in said inboard impact surface;

said layer of low density rigid material overlying an inflatable air bag; means including a canister for locating said air bag to be deployed against the inboard surface of said layer of low density rigid material for imposing a force on the hidden tear seam segment for causing it to separate and to cause said door to pivot about said hinge to form an opening through said cover for deployment of an inflated air bag into the passenger compartment of a motor vehicle.

6. An invisible door assembly for a supplemental inflatable restraint device housed within an interior trim product of a motor vehicle comprising an outer skin cover formed as the outer skin of the interior trim product;

a layer of low density rigid material backing said outer cover having an inboard impact surface and convolutions defining a three sided hidden door with a hinged end; one of said convolutions forming said hinge and the other of said convolutions forming a hidden tear segment; said hinge and hidden tear segment formed in said inboard impact surface;

said layer of low density rigid material overlying an inflatable air bag; means including a canister for locating said air bag to be deployed against the inboard surface of said layer of low density rigid material for imposing a force on the hidden tear segment for causing it to separate and for causing said door to pivot about said hinge to form an opening through said cover for deployment of an inflated air bag into the passenger compartment of a motor vehicle.

7. An invisible door assembly for a supplemental inflatable restraint device housed within an interior trim product of a motor vehicle comprising an outer skin cover formed as the outer skin of the interior trim product;

a layer of low density rigid material backing said outer cover having a hidden door therein; means embedded in said low density rigid material for reinforcing it only in the vicinity of said hidden door; said hidden door having an inboard impact surface including first and second convolutions therein; one of said convolutions forming a hinge and the other of said convolutions forming a hidden tear segment formed in said inboard impact surface;

said layer of low density rigid material overlying an inflatable air bag; means including a canister for locating said air bag to be deployed against the inboard surface of said layer of low density rigid material for imposing a force on the hidden tear seam segment for causing it to separate to form an opening through said cover for deployment of an inflated air bag into the passenger compartment of a motor vehicle.

8. An invisible door assembly for a supplemental inflatable restraint device housed within an interior trim product of a motor vehicle comprising an outer skin cover formed as the outer skin of the interior trim product;

a layer of low density rigid material bonded to said outer cover having a hidden door therein; means embedded in said low density rigid material for reinforcing it only in the vicinity of said hidden door; said hidden door having an inboard impact surface including first and second convolutions therein; one of said convolutions forming a hinge and the other of said convolutions forming a hidden tear segment formed in said inboard impact surface;

said hidden tear segment being unreinforced and having lesser strength than said hinge;

said layer of low density rigid material overlying an inflatable air bag; means including a canister for locating said air bag to be deployed against the inboard surface of said layer of low density rigid material for imposing a force on said hidden tear seam segment for causing it to separate to form an opening through said cover for deployment of an inflated air bag into the passenger compartment of a motor vehicle.

Fig. 1

Fig. 2

Fig. 2A   Fig. 2B   Fig. 2C

Fig. 3

Fig. 4

Fig. 5

**European Patent Office**

# EUROPEAN SEARCH REPORT

Application Number

EP 93 30 5543

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 643 451 (NISSAN MOTOR) <br> * page 6, line 4 - line 28 * | 1-8 | B60R21/20 |
| D | & US-A-4 097 064 | | |
| A | DE-C-3 904 977 (DIAMLER-BENZ) <br> * column 1, line 57 - column 2, line 3 * | 1-8 | |
| A | DE-A-4 137 926 (TOYOTA) <br> * column 1, line 16 - line 29 * | 1-8 | |
| A | GB-A-2 244 449 (TAKATA) <br> * page 2, line 1 - line 6; figure 3 * | 7,8 | |
| A | GB-A-2 250 295 (ASAHI KASEI) <br> * page 7, line 24 - page 8, line 5 * | 1-8 | |
| A | DE-A-2 104 109 (FORD-WERKE) <br> * page 5, line 6 - line 16 * | 6 | |
| D | & US-A-3 622 176 | | |
| A | EP-A-0 465 869 (DAVIDSON TEXTRON) | | TECHNICAL FIELDS SEARCHED (Int. Cl.5) <br><br> B60R |

The present search report has been drawn up for all claims

| Place of search | Date of completion of the search | Examiner |
|---|---|---|
| BERLIN | 25 NOVEMBER 1993 | STANDRING M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)